# Europäisches Patentamt

## European Patent Office

### Office européen des brevets

(19)

(11) **EP 0 595 889 B1**

(12) ## EUROPÄISCHE PATENTSCHRIFT

(45) Veröffentlichungstag und Bekanntmachung des Hinweises auf die Patenterteilung:
**15.10.1997 Patentblatt 1997/42**

(21) Anmeldenummer: **92915507.5**

(22) Anmeldetag: **21.07.1992**

(51) Int Cl.6: **G10L 7/06**, G10L 7/08

(86) Internationale Anmeldenummer:
**PCT/AT92/00100**

(87) Internationale Veröffentlichungsnummer:
**WO 93/02448 (04.02.1993 Gazette 1993/04)**

(54) **VERFAHREN UND ANORDNUNG ZUM ERKENNEN VON EINZELWÖRTERN GESPROCHENER SPRACHE**

METHOD AND DEVICE FOR RECOGNIZING INDIVIDUAL WORDS OF SPOKEN SPEECH

PROCEDE ET DISPOSITIF POUR LA RECONNAISSANCE DE MOTS ISOLES DU LANGAGE PARLE

(84) Benannte Vertragsstaaten:
**AT BE CH DE DK ES FR GB GR IT LI LU MC NL SE**

(30) Priorität: **25.07.1991 AT 14889/91**

(43) Veröffentlichungstag der Anmeldung:
**11.05.1994 Patentblatt 1994/19**

(73) Patentinhaber: **Siemens Aktiengesellschaft Österreich**
**1210 Wien (AT)**

(72) Erfinder: **TSCHIRK, Wolfgang**
**A-1150 Wien (AT)**

(74) Vertreter: **Peham, Alois**
**Siemens AG,**
**Postfach 22 16 34**
**80506 München (DE)**

(56) Entgegenhaltungen:
**EP-A- 0 435 282          DE-A- 3 837 385**
**US-A- 4 975 961**

- **Patent Abstracts of Japan, unexamined applications, Sektion P, Band 14, Nr. 264, 07. Juni 1990, The Patent Office Japanese Government, see page 25 P 1057, Kokai-Nr. 02-72 397 (Hitachi Ltd)**
- **Patent Abstracts of Japan, unexamined applications, E Sektion, Band 10, Nr.**
- **240, 18. November 1986, The Patent Office Japanese Government, see page 122 E 455, Kokai-Nr. 61-144 157 (NIPPON TELEGR & TELEPH CORP.)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Erkennen von Einzelwörtern gesprochener Sprache und eine Anordnung zur Durchführung des Verfahrens.

Das Erkennen von gesprochener Sprache gehört zu den zukunftsträchtigsten, zugleich aber auch schwierigsten Gebieten der Nachrichtentechnik. Es gibt eine Fülle von Anwendungen für die Spracherkennung, so zum Beispiel die gesprochene Eingabe anstelle der Tastatureingabe bei Textverarbeitungssystemen (phonetische Schreibmaschinen), den Informationsabruf oder das Bestellen über Telefon und die Sprachsteuerung von Maschinensystemen. Die breite Einführung von Spracherkennungssystemen ist bisher jedoch an einer Vielzahl von ungelösten Problemen sowohl technischer als auch psychologischer Natur gescheitert.

Spracherkennung ist eine Mustererkennungsaufgabe. Das Sprachsignal der gesprochenen Äußerung (Laut - Wort - Satz usw.) bildet das Eingabemuster, dessen Bedeutung erkannt bzw. verstanden werden muß.

Der Erkennungsprozeß kann in zwei Stufen gegliedert werden, die Merkmalsextraktion und die Klassifikation. Die Merkmalsextraktion dient dazu, die für das Erkennen relevanten Merkmale aus dem Sprachsignal zu extrahieren und nicht relevante Anteile zu eliminieren. Im zweiten Schritt - Klassifikation - wird aus den aktuellen extrahierten Merkmalen auf die Bedeutung der aktuellen Sprachprobe geschlossen.

Der Erfindung liegt die Aufgabe zugrunde, ein Verfahren anzugeben, mit dem eine begrenzte Anzahl von Einzelwörtern gesprochener Sprache erkannt werden kann.

Dies geschieht erfindungsgemäß mit einem Verfahren nach dem Anspruch 1.

Das erfindungsgemäße Verfahren zeichnet sich durch besonders hohe Erkennungsraten aus. Es ist weiterhin relativ unempfindlich gegenüber Hintergrundgeräuschen. Ein weiterer Vorteil des Verfahrens liegt darin, daß das der Einordnung des Einzelwortes zugrunde liegende Korrelogramm $\underline{K}$ einfach festgelegt werden kann. Diese einfache Berechnungsmöglichkeit ist eine Voraussetzung für die Realisierung eines Spracherkennungssystems mit geringem Hardwareaufwand. Ein Vorteil des Verfahrens liegt auch darin, daß die Zahl der erkennbaren Einzelwörter grundsätzlich nicht begrenzt ist. Das erfindungsgemäße Verfahren ist daher bei Anwendungsfällen mit sehr großem Wortschatz besonders vorteilhaft.

Ein günstiger Kompromiß zwischen dem Umfang der zu verarbeitenden Daten - Berechnungsaufwand - und einer hohen Erkennungsrate wird dadurch erzielt, daß das Verfahren gemäß dem Kennzeichen des Anspruchs 2 ausgestaltet ist.

Besonders hohe Erkennungsraten erhält man, wenn für die Indices j,h, k des Korrelogramms $\underline{K}$ die Bedingungen nach dem Kennzeichen des Anspruchs 3 gewählt werden.

Der Einsatz eines neuronalen Netzwerkes zur Einordnung des gesprochenen Einzelwortes bringt weitere Vorteile mit sich. Neuronale Netze sind eine grobe Nachbildung der menschlichen Gehirnstruktur mit ihrer assoziativen Arbeitsweise. Sie sind bei Problemen der Mustererkennung, wie sie auch bei der Spracherkennung gegeben sind, herkömmlichen Rechnerstrukturen überlegen.

Das neuronale Netzwerk nach dem Kennzeichen des Anspruchs 5 zeichnet sich durch seine besonders günstige "Lernfähigkeit" aus, d.h. daß die "Trainingsphasen" für die zu erkennenden Wörter auf ein Minimum reduziert sind.

Eine Ausgestaltung des Verfahrens nach Anspruch 6 bewirkt eine einfache Realisierbarkeit des neuronalen Netzwerks und eine weitere Verringerung des Berechnungsaufwandes.

Mit der Anordnung nach Anspruch 7 kann das erfindungsgemäße Verfahren besonders günstig realisiert werden.

Dabei ist es für den Einsatz in übergeordneten Systemen günstig, wenn die gesamte Anordnung gemäß Anspruch 8 als integriertes Bauelement ausgeführt ist.

Der Einsatz eines Spracherkennungsverfahrens in einem Telefonapparat gemäß Anspruch 9 bewirkt nicht nur hohen Bedienungskomfort, sondern bringt bei Einsatz in einem Autotelefon auch eine Erhöhung der Verkehrssicherheit mit sich, da der Fahrer und Telefonbenutzer durch den Wählvorgang nicht abgelenkt wird.

Die Erfindung wird anhand von drei Figuren näher erläutert.

Es zeigen beispielhaft:

Figur 1      einen Ablauf des erfindungsgemäßen Verfahrens,
Figur 2      die spektrale Amplitudenverteilung von drei unterschiedlichen Phonemen,
Figur 3      die Struktur eines neuronalen Netzwerks, und
Figur 4      eine Anordnung zur Durchführung des Verfahrens.

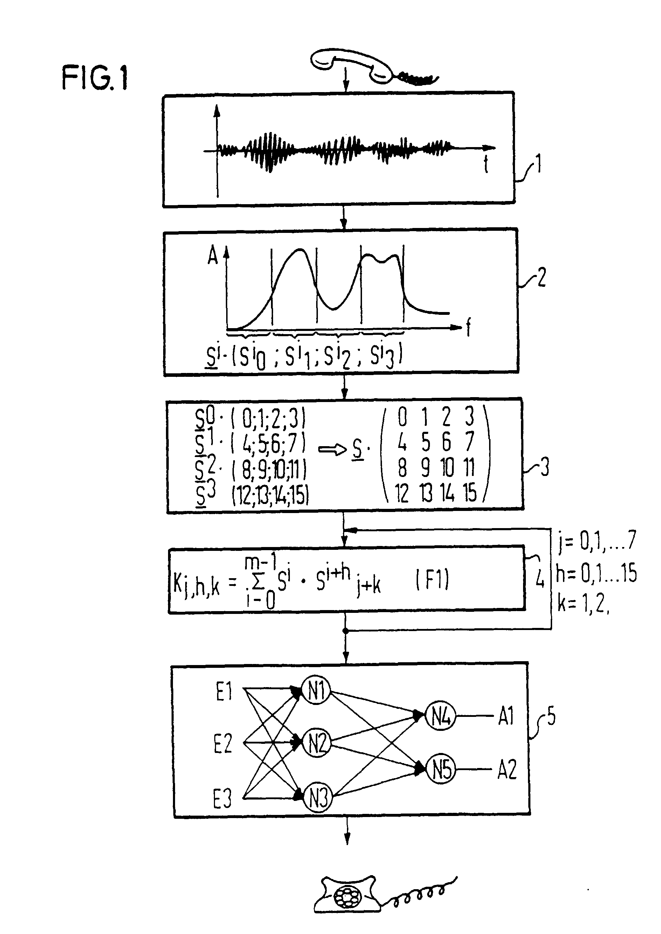

Das in Figur 1 dargestellte Verfahren wird in einem Telefonapparat zum Auslösen des Wählvorganges angewandt. Mit dem Verfahren können zehn unterschiedliche Einzelwörter erkannt werden. Jedem Einzelwort ist eine bestimmte Telefonnummer zugeordnet, die nach dem Erkennen des Wortes selbsttätig gebildet wird.

Dazu wird nach dem Abheben des Telefonhörers das Einzelwort, beispielsweise der Name des gewünschten Teilnehmers, in den Hörer gesprochen, und das Gerät bildet dann die zugehörige Nummer automatisch. Das ist besonders vorteilhaft in Autotelefonen, bei denen ein herkömmlicher Wählvorgang die Verkehrssicherheit des Wählenden herabsetzen kann.

Das erfindungsgemäße Verfahren verläuft folgendermaßen: In einem ersten Verfahrensschritt 1 wird das in einem Erwartungszeitraum gesprochene Wort durch ein Mikrofon des Telefonapparats in ein elektrisches Signal umgewandelt. Dieses Signal wird verstärkt, abgetastet und digitalisiert, das heißt in eine Folge von Abtastwerten umgesetzt. Die Abtastrate beträgt üblicherweise 8 kHz.

Damit die Abtastung auch alle wesentlichen Signaleigenschaften erfaßt, muß das Abtasttheorem erfüllt sein. Dieses besagt, daß die höchste im Signal auftretende Frequenz kleiner als die halbe Abtastfrequenz sein muß, da es andernfalls durch den sogenannten Aliasing-Effekt zu einer Verfälschung der Signalinformation kommt. Im vorliegenden Fall bedeutet das, daß das Sprachsignal nur Frequenzanteile unter 4 kHz aufweisen darf. Dies ist bei einem Telefonsignal mit einem Frequenzbereich von 150 Hz - 3400 Hz der Fall.

Aus jeweils 256 Abtastwerten wird in einem zweiten Verfahrensschritt 2 mittels einer Fourier-Transformation die mittlere spektrale Amplitudenverteilung des Sprachsignals in dem durch die Zahl der Abtastwerte bestimmten Zeitraum von 32 msec berechnet. und als Spektralvektor $\underline{S}^i$ dargestellt. Jeder Spektralvektor $\underline{S}^i$ umfaßt acht Elemente ($S^i_o$, $S^i_l$, ... $S^i_7$), von denen jedes die Amplitude eines Frequenzbandes mit der Bandbreite $b_c = 406,25$ Hz repräsentiert. Das gesamte erfaßte Frequenzband umfaßt somit 406,25 Hz mal 8 = 3250 Hz und deckt sich mit dem Frequenzbereich des Telefonsystems.

Auch die halbe Frequenz der Spektralvektoren $\underline{S}^i$, die 0,5 x 1/32 msec = 15,625 Hz beträgt, bildet nach dem Abtasttheorem eine Grenze für die Informationsübertragung. Hier betrifft sie die Frequenz bzw. die Dauer der einzelnen Phoneme.

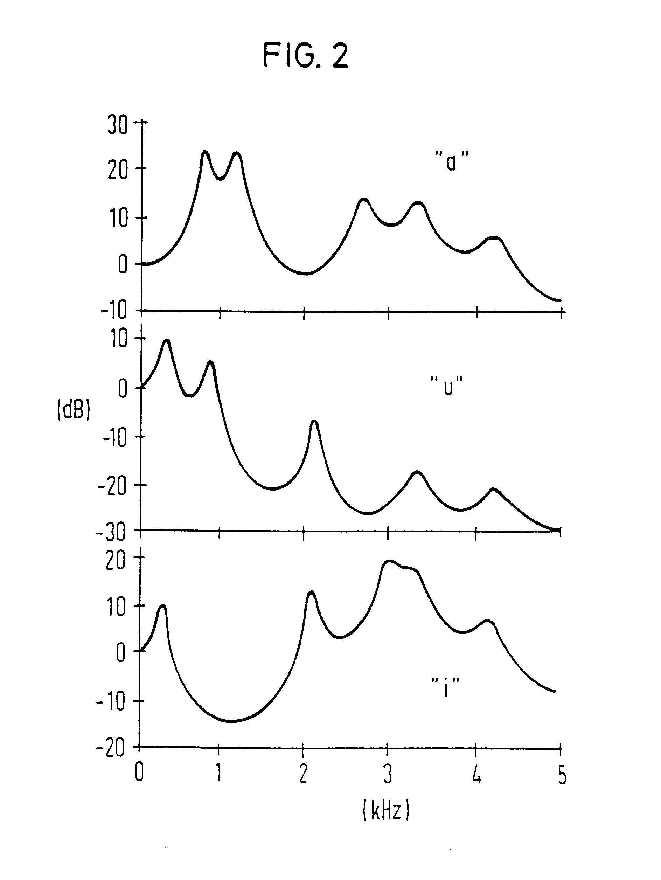

Phoneme sind die kleinsten Wortelemente, denen man eine sinnbildende Information zuordnen kann. Jedes Phonem, von denen z.B. die deutsche Sprache etwa 40 aufweist, ist durch eine charakteristische spektrale Amplitudenverteilung bestimmt. Dazu zeigt Fig. 2 in einem Diagramm die spektrale Amplitudenverteilung für die Phoneme, die den Vokalen "a", "u" und "i" entsprechen.

Untersuchungen haben gezeigt, daß ca. 95 % der Phoneme länger als 62 msec sind, also eine Frequenz aufweisen, die kleiner als 16 Hz ist. Diese Phoneme werden daher durch die Spektralvektoren $\underline{S}^i$ korrekt wiedergegeben. Die restlichen 5 % Sprachanteil, wie beispielsweise Explosivlaute (p, t usw.), spielen für die Verständlichkeit nur eine geringe Rolle. Es ist daher ohne praktische Bedeutung, daß sie bei dem vorliegenden Verfahren nicht exakt erfaßt werden.

Aus den in dem Erwartungszeitraum ermittelten Spektralvektoren $\underline{S}^i$, welche gemäß den obigen Ausführungen die wesentlichen Merkmale des gesprochenen Einzelwortes enthalten, wird in einem dritten Verfahrensschritt 3 ein Spektrogramm $\underline{S}$ gebildet. Dies geschieht durch Anordnung der Spektralvektoren zu einer zweidimensionalen Matrix, wobei jeder Spektralvektor eine Zeile dieser Matrix bildet. In einem vierten Verfahrensschritt 4 werden die einzelnen Elemente $K_{j,h,k}$ eines Korrelogrammes $\underline{K}$ gemäß

$$K_{j,h,k} = \sum_{i=0}^{m-1} S^i_j * S^{i+h}_{j+k}$$

gebildet. Der Umfang dieses Korrelogramms ist durch den Wertebereich der Koordinaten gegeben. Dieser beträgt bei dem Beispiel:

$$j = 0, 1, ... 7; \quad h = 0,1, ... 15; \quad k = 1,2;$$

Die Anordnung des Korrelogramms $\underline{K}$ ist so, daß jeder der Indices einen physikalischen Parameter des Sprachsignals festlegt. Der Index j bezeichnet das Frequenzband; für j = 3 beispielsweise den Bereich 1368,75 Hz - 1775 Hz, der Index h legt die zeitliche Verschiebung zwischen den zu korrelierenden Signalanteilen fest; beispielsweise h = 15 die maximale Verschiebung von 15 mal 32 msec = 480 msec. Der Index k legt eine Frequenzverschiebung $\Delta$ f zwischen den zu korrelierenden Signalanteilen fest;, k = 2 ergibt ein $\Delta$ f von 812,5 Hz.

Die erfindungsgemäße Behandlung des Sprachsignals führt unter anderem dazu, daß die Elemente des Korrelogramms $\underline{K}$ im wesentlichen zeitunabhängig sind. Anfang und Ende des gesprochenen Einzelwortes sowie die Dauer desselben verlieren dadurch an Bedeutung.

Diese Zeitunabhängigkeit ist eine wesentliche Voraussetzung für eine erfolgreiche Spracherkennung. In herkömmlichen Verfahren wird sie durch aufwendige Methoden wie z.B. durch "Dynamische Zeitnormierung" (siehe Sakoe, M.;

Chiba, S.: Dynamic programming algorithms optimization for spoken word recognition. IEEE Trans. on ASSP, ASSP - 26) erreicht. Bei dem erfindungsgemäßen Verfahren werden dieser Berechnungsaufwand und die bei dieser Methode auftretenden Fehler vermieden.

Mit den genannten Werten für die Indices j, n, k und der Bedingung $j+k \leq j_{max}$ enthält das Korrelogramm $\underline{K}$ 208 Elemente, die in einem weiteren Verfahrensschritt zur Einordnung (Klassifizierung) des gesprochenen Einzelwortes herangezogen werden. Dazu wird jedes Element an einen Eingang eines neuronalen Netzwerks angelegt.

Dieses Netzwerk enthält somit 208 Eingänge und für jedes zu erkennende Wort einen Ausgang, das heißt also zehn Ausgänge. Die Struktur des neuronalen Netzwerks wird anhand der Figur 2 näher beschrieben. Die Figur zeigt ein sogenanntes "Feadforward Neural Network". Dieses umfaßt eine Eingangsschicht, bestehend aus Eingangsneuronen N1, N2, N3 und eine Ausgangsschicht mit Ausgangsneuronen N4, N5. Das Netzwerk hat drei Eingänge E1, E2, E3 und zwei Ausgänge A1, A2. Jeder Eingang E1, E2, E3 ist mit jedem Eingangsneuron N1, N2, N3 verbunden. Der einzige Ausgang jedes Eingangsneurons ist mit jedem Ausgangsneuron N4, N5 verbunden, deren Ausgänge A1, A2 jeweils ein erkanntes Muster anzeigen.

Der notwendige Umfang eines neuronalen Netzwerkes ist von der Komplexität der zu lösenden Aufgabe bestimmt. Wie bereits gesagt, bestimmt die Zahl der Eingangselemente (die Dimension eines Eingangsmerkmalsvektors) die Zahl der Netzwerk-Eingänge E1, E2, E3. Die Zahl der Netzwerk-Ausgänge A1, A2 ist durch die Anzahl der zu erkennenden Muster festgelegt. Da jedes Neuron nur einen einzigen Ausgang aufweist, ist mit der Zahl der Netzwerk-Ausgänge auch die Zahl der Ausgangsneuronen N4, N5 festgelegt. Sie beträgt im vorliegenden Beispiel 10 - nach der Zahl der zu erkennenden Einzelworte.

Die notwendige Zahl der Eingangsneuronen N1, N2, N3 ist von der Zahl der zu erkennenden Muster (Einzelworte), der Dimension des Eingangsmerkmalsvektors (Zahl der Elemente des Korrelogramms $\underline{K}$) aber auch von den Unterschieden zwischen den zu erkennenden Mustern (Einzelworten) abhängig. So benötigt man für die Unterscheidung ähnlich klingender Wörter ein umfangreicheres neuronales Netzwerk als für deutlich unterscheidbare Wörter.

Die Zahl der Eingangsneuronen N1, N2, N3 wird daher mittels eines iterativen Konfigurationsvorganges, bestehend aus mehreren sogenannten Lern- oder Trainingsphasen des neuronalen Netzwerkes festgelegt. Dabei werden die zu erkennenden Muster (Einzelwerte) an die Eingänge des neuronalen Netzwerkes angelegt und mit dem gewünschten Ausgangsergebnis verglichen.

Aus dem Vergleich werden nach dem sogenannten "backpropagation"-Algorithmus (P. Werbos, Beyond Regression: New Tools for Prediction and Analysis in the Behavioral Sciences. Ph. D. thesis, Harvard University, Cambridge, MA, Aug. 1974) Aussagen über die "Abstimmung" der einzelnen Neuronen N1, N2, N3, N4, N5 gewonnen.

Jedes Neuron besteht im wesentlichen aus einem Summierelement, dem die an den Eingängen des Neurons anliegenden Werte gewichtet zugeführt werden, und einem nichtlinearen Verstärkerelement zwischen dem Summierelement und dem Ausgang des Neurons. Eine ausführliche Beschreibung des Aufbaus eines Neurons findet sich beispielsweise in "Layered Neural Nets for Pattern Recognition", B. Widrow, R.G. Winter, R.A. Baxter; IEEE Transactions on Acoustics, Speech and Signal Processing, Vol. 36. No. 7. July 88.

Die "Abstimmung" des Neurons erfolgt über die Festlegung der Gewichte, mit denen die Eingangswerte verstärkt werden. Ziel der Lern- und Trainingsphase des neuronalen Netzwerks ist somit die derartige Festlegung aller Gewichte eines Netzwerkes, daß danach der gewünschte Erkennungsvorgang stattfindet. Die Gewichte sind daher die Träger der Information eines neuronalen Netzwerks.

Wenn das Ziel des korrekten Erkennungsvorganges während einer Lern- und Trainingsphase nicht erreicht wird, bedeutet dies im allgemeinen, daß die Zahl der Neuronen im Netzwerk für das gegenständliche Problem zu gering ist, sie muß daher erhöht werden. Danach wird die Lern- und Trainingsphase mit dem vergrößerten neuronalen Netzwerk wiederholt.

Bei dem gegenständlichen Ausführungsbeispiel sind in der überwiegenden Zahl der Fälle 20 Eingangsneuronen ausreichend. Daher wird bei der ersten Trainingsphase auch von dieser Zahl ausgegangen. Innerhalb eines ersten Abschnittes der Trainingsphase, der aus maximal 10 Wiederholungen des Soll-Istergebnisvergleichs und der dazugehörigen "Abstimmung" des Netzwerkes besteht, muß dasselbe die Fähigkeit zum Erkennen von 10 unterschiedlichen Einzelwörtern erlangen, wobei jedes Einzelwort in bis zu 20 unterschiedlichen Proben, die von verschiedenen Personen stammen können, vorliegt. Gelingt dies nicht, so wird die Zahl der Eingangsneuronen erhöht (auf 21) und die Trainingsphase wiederholt. Wenn die Zahl der Eingangsneuronen ausreicht und der Erkennungsvorgang prinzipiell für ein neuronales Netzwerk durchführbar ist, so wird er nach 5 bis 6 Wiederholungen korrekt durchgeführt. Danach wird in einem zweiten Abschnitt der Trainingsphase, der aus 8 Wiederholungen besteht, der Trainingseffekt vertieft. Nach Abschluß dieses zweiten Abschnittes ist das neuronale Netz einsatzbereit.

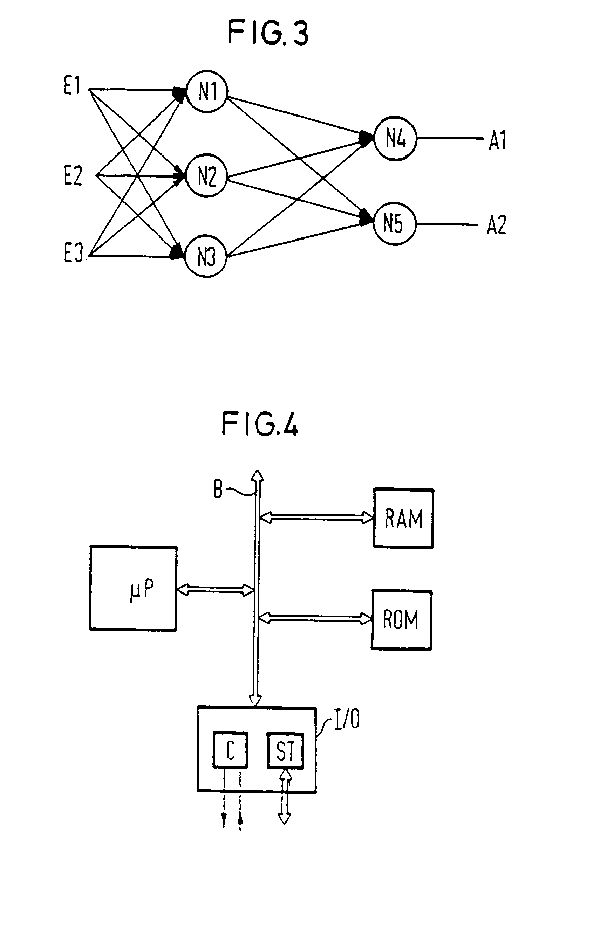

Figur 3 zeigt ein Beispiel einer Anordnung zur Durchführung des erfindungsgemäßen Verfahrens. Sie umfaßt einen Digitalsignalprozessorblock uP, ein Bussystem B, einen Programmspeicher ROM, einen Arbeitsspeicher RAM und eine Ein-/Ausgabeeinheit I/O.

Die Anordnung ist in an sich bekannter Weise mit handelsüblichen Bauelementen aufgebaut. Kern des Digitalsignalprozessorblocks uP ist ein Signalprozessor des Typs ADSP 2111 der Firma Analog Devices. Der detaillierte Aufbau der Anordnung ist einem User's Manual zu dem genannten Signalprozessor entnehmbar. Die Ein-/Ausgabeeinheit umfaßt einen Signalteil C, der aus einem handelsüblichen PCM-Codec aufgebaut ist, und einem Steuerteil ST für die Verbindung zu einer steuernden Einheit wie beispielsweise einem Personalcomputer.

Über den Signalteil C der Ein-/Ausgabeeinheit erfolgt die Eingabe des Sprachsignals und eine eventuelle akustische Sprachausgabe wie beispielsweise Bedienungshinweise.

**Patentansprüche**

1. Verfahren zum Erkennen von Einzelwörtern gesprochener Sprache mit folgenden Verfahrensschritten:

   - die in einem Erwartungszeitraum gesprochene Sprache wird in ein elektrisches Sprachsignal umgewandelt;
   - in durch die zeitliche Dauer der Phoneme bestimmten Zeitabständen $t_s$ wird die augenblickliche spektrale Amplitudenverteilung des Sprachsignales ermittelt und als Spektralvektor $\underline{S}^i$ ($i = 0,1 \ldots m-1$) dargestellt, wobei jedes Element ($S^i_0$, $S^i_1$, ... $S^i_{n-1}$) des Spektralvektors $\underline{S}^i$ die Amplitude eines Frequenzbandes mit der Bandbreite $b_c$ repräsentiert;
   - aus den in dem Erwartungszeitraum ermittelten Spektralvektoren $\underline{S}^i$ wird ein Spektrogramm $\underline{S}$ gemäß

$$\underline{S} = \begin{pmatrix} S^\circ_0, & S^\circ_1 & \cdots & S^\circ_{n-1} \\ S^1_0 & & & \\ \vdots & & & \\ S^{m-1}_0 & & & \end{pmatrix} = \begin{pmatrix} \underline{S}^0 \\ \underline{S}^1 \\ \\ \underline{S}^{m-1} \end{pmatrix}$$

   gebildet;
   - aus dem Spektrogramm $\underline{S}$ wird ein Korrelogramm $\underline{K}$ mit den Koordinaten j, h, k ermittelt, wobei jedes Element $K_{j,h,k}$ des Korrelogrammes $\underline{K}$ gemäß

$$K_{j,h,k} \quad = \quad \sum_{i=0}^{m-1} \quad S^i_j \ast S^{i+h}_{j+k}$$

   gebildet wird;
   - das Korrelogramm $\underline{K}$ wird als worttypisches Merkmalsmuster zur Klassifikation des gesprochenen Einzelwortes herangezogen.

2. Verfahren nach Anspruch 1, **dadurch gekennzeichnet**, daß der bestimmte Zeitabstand $t_s$ zwischen zwei aufeinanderfolgenden Spektralvektoren $\underline{S}^i$ und $\underline{S}^{i+1}$ gleich 32 msec ist.

3. Verfahren nach Anspruch 1 oder 2, **dadurch gekennzeichnet**, daß für die Indizes j,h,k des Korrelogrammes $\underline{K}$ die Bedingungen

$$k > 0; \ k \times b_c < 1\text{kHz}$$

$$j + k \leq n - 1$$

$$j, h \geq 0$$

und

$$h \times ts < 500 \text{ msec}$$

gewählt werden.

4. Verfahren nach Anspruch 1, 2 oder 3, **dadurch gekennzeichnet**, daß zur Klassifikation des gesprochenen Einzelwortes ein neuronales Netzwerk verwendet wird.

5. Verfahren nach Anspruch 4, **dadurch gekennzeichnet**, daß das neuronale Netzwerk eine Eingangsebene mit einer ersten Anzahl von Neuronen und eine Ausgangsebene mit einer zweiten Anzahl von Neuronen enthält, daß jedes Element des worttypischen Korrelogramms $\underline{K}$ mit jedem Neuron der Eingangsebene verbunden ist, daß der Ausgang jedes dieser Neuronen mit jedem Neuron der Ausgangsebene verbunden ist und daß der Ausgang eines Neurons der Ausgangsebene ein bestimmtes erkanntes Einzelwort anzeigt.

6. Verfahren nach Anspruch 4 oder 5, **dadurch gekennzeichnet**, daß jedes Neuron eine nichtlineare Übertragungsfunktion gemäß

$$f(x) = \frac{x}{|x| + 1}$$

aufweist.

7. Anordnung die das des Verfahren nach einem der Ansprüche 1 bis 6 durchführt, **dadurch gekennzeichnet**, daß ein Digitalsignalprozessor vorgesehen ist, der über ein Bussystem, bestehend aus Daten-, Adreß- und Steuerleitungen mit einem Programmspeicher, einem Arbeitsspeicher und einer Ein- Ausgabeeinheit verbunden ist.

8. Anordnung nach Anspruch 7, **dadurch gekennzeichnet**, daß die Anordnung als integriertes Bauelement ausgeführt ist.

9. Verfahren nach einem der Ansprüche 1 bis 6, **dadurch gekennzeichnet**, daß aufgrund des erkannten Einzelworts ein Wählvorgang in einem Telefonapparat mit einer dem Einzelwort zugeordneten Telefonnummer ausgelöst wird.

## Claims

1. Method for recognizing individual words of spoken speech, having the following method steps:

   - the speech spoken in an expectation period is converted into an electric speech signal;
   - the instantaneous spectral amplitude distribution of the speech signal is determined in time intervals $t_s$ specified by the temporal duration of the phonemes and represented as a spectral vector $\underline{S}^i$ ($i = 0, 1 \ldots m-1$), each element ($S^i_o$, $S^i_l$, $\ldots S^i_{n-1}$) of the spectral vector $\underline{S}^i$ representing the amplitude of a frequency band of band width $b_c$;
   - a spectrogram $\underline{S}$ is formed in accordance with

$$S = \begin{pmatrix} S^o{}_o, & S^o{}_1 & \cdots & S^o{}_{n-1} \\ S^1{}_o & & & \\ & \vdots & & \\ S^{m-1}{}_o & & & \end{pmatrix} = \begin{pmatrix} \underline{S}^o \\ \underline{S}^1 \\ \underline{S}^{m-1} \end{pmatrix}$$

   from the spectral vectors $\underline{S}^i$ determined in the expectation period;
   - correlogram $\underline{K}$ with the coordinates j, h, k is determined from the spectrogram $\underline{S}$, each element $K_{j, h, k}$ of the correlogram K being formed in accordance with

$$k_{j,\,h,\,k} = \sum_{i=o}^{m-1} S^{i}{}_{j} * S^{i+h}{}_{j+k}$$

- the correlogram $\underline{K}$ is used as a word-typical feature pattern to classify the spoken individual word.

2. Method according to Claim 1, characterized in that the specified time interval $t_s$ between two consecutive spectral vectors $\underline{S}^i$ and $\underline{S}^{i+1}$ is equal to 32 msec.

3. Method according to Claim 1 or 2, characterized in that the conditions,

$$k > O;\ k \times b_c,\ 1\text{kHz}$$

$$+\ k \leq n - 1$$

$$j,\ h \geq 0$$

and

$$h \times ts < 500\ \text{msec}$$

are selected for the indices j, h, k of the correlogram $\underline{K}$.

4. Method according to Claim 1, 2 or 3, characterized in that a neural network is used for classifying the individual spoken work.

5. Method according to Claim 4, characterized in that the neural network contains an input plane having a first number of neurons, and an output plane having a second number of neurons, in that each element of the word-typical correlogram $\underline{K}$ is connected to each neuron of the input plane, in that the output of each of these neurons is connected to each neuron of the output plane, and in that the output of a neuron of the output plane indicates a specific recognized individual word.

6. Method according to Claim 4 or 5, characterized in that each neuron has a nonlinear transfer function in accordance with

$$f(x) = \frac{x}{|x| + 1}$$

7. Arrangement which carries out the method according to one of Claims 1 to 6, characterized in that a digital signal processor is provided which is connected, via a bus system comprising data, address and control lines, to a program memory, a main memory and an input/output unit.

8. Device according to Claim 7, characterized in that the arrangement is designed as an integrated component.

9. Method according to one of Claims 1 to 6, characterized in that the recognized individual word triggers a dialling operation in a telephone set having a telephone number assigned to the individual word.

**Revendications**

1. Procédé de reconnaissance de mots particuliers d'une langue orale, avec les étapes opératoires suivantes :

- on transforme la parole prononcée dans un intervalle de temps escompté en un signal vocal électrique ;

- à des intervalles de temps $t_s$ déterminés par la durée des phonèmes, on détermine la distribution spectrale instantanée des amplitudes du signal vocal et on la représente sous forme de vecteur spectral $\underline{S}^i$ ($i = 0, 1, ..., m\ddot{A}1$), chaque élément ($S^i_0$, $S^i_1$, ..., ) du vecteur spectral $\underline{S}^i$ représentant l'amplitude d'une bande de fréquence de largeur de bande $b_c$ ;
- on forme à partir des vecteurs spectraux $\underline{S}^i$ déterminés dans l'intervalle de temps escompté un spectrogramme $\underline{S}$ selon la formule :

$$\underline{S} = \begin{pmatrix} S^{\bullet}_{0}, & S^{\bullet}_{1} & \cdots & S^{\bullet}_{n-1} \\ S^1_{0} & & & \\ \vdots & & & \\ S^{m-1}_{0} & & & \ddots \end{pmatrix} = \begin{pmatrix} \underline{S}^0 \\ \underline{S}^1 \\ \\ \underline{S}^{m-1} \end{pmatrix}$$

- on détermine à partir du spectrogramme $\underline{S}$ un diagramme de corrélation $\underline{K}$ avec les coordonnées j, h, k, chaque élément $K_{j,h,k}$ du diagramme de corrélation $\underline{K}$ étant formé selon la formule :

$$K_{j,h,k} = \sum_{i=0}^{m-1} S i_j \star S i + h_{j+k}$$

- on exploite le diagramme de corrélation $\underline{K}$ comme forme caractéristique typique du mot pour la classification du mot particulier prononcé.

2. Procédé selon la revendication 1, caractérisé par le fait que l'intervalle de temps ts déterminé entre deux vecteurs spectraux $\underline{S}^i$ et $\underline{S}^{i+1}$ successifs est égal à 32 ms.

3. Procédé selon la revendication 1 ou 2, caractérisé par le fait que l'on choisit pour les indices j, h, k du diagramme de corrélation $\underline{K}$ les conditions :

$$k > 0 \; ; \; k \times b_c < 1 \text{ kHz} \; ;$$

$$j + k \mathrm{I} n - 1 \; ;$$

$$j, h \geq 0 \; ;$$

et

$$h \times ts < 500 \text{ ms} \; .$$

4. Procédé selon la revendication 1, 2 ou 3 caractérisé par le fait que l'on utilise pour la classification du mot particulier prononcé un réseau neuronal.

5. Procédé selon la revendication 4, caractérisé par le fait que le réseau neuronal comprend un plan d'entrée ayant un premier nombre de neurones et un plan de sortie ayant un deuxième nombre de neurones, que chaque élément du diagramme de corrélation $\underline{K}$ typique des mots est relié à chaque neurone du niveau d'entrée, que la sortie de chacun de ces neurones est reliée à chaque neurone du plan de sortie et que la sortie d'un neurone du plan de sortie indique un certain mot particulier reconnu.

6. Procédé selon la revendication 4 ou 5, caractérisé par le fait que chaque neurone a une fonction de transfert non linéaire selon :

$$f(x) = \frac{x}{|x| + 1}$$

7. Dispositif qui met en oeuvre le procédé selon l'une des revendications 1 à 6, caractérisé par le fait qu'on prévoit un processeur de signaux numériques qui est relié par l'intermédiaire d'un système de bus, constitué de lignes de données, d'adresses et de commande, à une mémoire de programme, à une mémoire de travail et à une unité d'entrée/sortie.

8. Dispositif selon la revendication 7, caractérisé par le fait que le dispositif est conçu sous forme de composant intégré.

9. Procédé selon l'une des revendications 1 à 6, caractérisé par le fait que l'on déclenche, en fonction du mot particulier reconnu, une opération de numérotation dans un téléphone avec un numéro de téléphone associé au mot particulier.

FIG.1

$\underline{S}^i \cdot (S^i_0 ; S^i_1 ; S^i_2 ; S^i_3)$ — (box 2)

$\underline{S}^0 \cdot (0;1;2;3)$
$\underline{S}^1 \cdot (4;5;6;7) \Rightarrow \underline{S} \cdot \begin{pmatrix} 0 & 1 & 2 & 3 \\ 4 & 5 & 6 & 7 \\ 8 & 9 & 10 & 11 \\ 12 & 13 & 14 & 15 \end{pmatrix}$
$\underline{S}^2 \cdot (8;9;10;11)$
$\underline{S}^3 (12;13;14;15)$

$$K_{j,h,k} = \sum_{i=0}^{m-1} S^i \cdot S^{i+h}_{j+k} \qquad (F1)$$

$j = 0,1,...7$
$h = 0,1...15$
$k = 1,2,$

E1  E2  E3  →  N1  N2  N3  →  N4 — A1  N5 — A2

FIG. 2

# FIG.3

# FIG.4